# EUROPEAN PATENT SPECIFICATION

(11) **EP 0 870 001 B1**
(45) Date of publication and mention of the grant of the patent: **22.08.2001**
(21) Application number: 96943250.9
(22) Date of filing: 24.12.1996
(51) Int. Cl.: C09D 195/00, C09J 195/00, C08L 95/00

(54) **BITUMINOUS COMPOSITION AND PROCESS FOR THE PREPARATION THEREOF**
BITUMINÖSE ZUSAMMENSETZUNG UND HERSTELLUNGSVERFAHREN
COMPOSITION BITUMINEUSE ET PROCEDE DE PREPARATION ASSOCIE

(30) Priority: 29.12.1995 GB 9526675
(43) Date of publication of application: 14.10.1998
(73) Proprietor: Hesselberg Hydro 1991 Limited, Sutton, Surrey SM3 9BS (GB)
(72) Inventor: LEGUIT, Nicolaas, NL-4105 DJ Culemborg (NL)
(74) Representative: Pett, Christopher Phineas
(86) International application number: GB9603235
(87) International publication number: WO9724410

(56) References cited:
- FR-A- 2 208 966
- GB-A- 1 494 279
- US-A- 3 761 291
- US-A- 3 783 000

## Description

This invention relates to a new form of a bituminous composition and a process for preparing it. More particularly, it relates to a bituminous composition of the mastic type, suitable for use, for example, in coating welded joints of pipelines for underwater use.

There is a continuous search for crude oil and natural gas in marine areas and there remains a constant need to lay underwater pipelines in order to allow oil and gas from well heads to be got ashore. Laying such pipelines is a skilled operation involving the welding together on a surface lay barge of lengths of concrete-coated steel tubing and, after the welding, the gaps in the coating are then surrounded by a sleeve or mould and filled with a mastic asphalt which is then allowed to cool.

Various types of mastic asphalt composition have been proposed, and one in common use at the present time is described in British Patent Specification No. 1494279. The invention in this specification lies in the selection of appropriate bitumen, filler and aggregate materials.

The procedure used to manufacture the product of British Patent Specification No. 1494279 is essentially that which has been used for many years - namely that the necessary amount of heated bitumen is mixed with all the desired filler material, which may have been pre-heated, and all the desired pre-heated aggregate material. Heat is continuously applied to the mixture, which is agitated to enable thorough mixing, after which the molten product is poured into moulds and allowed to cool. During cooling, dense solid blocks of mastic are produced which can then be shaped and cut as necessary after further cooling for loading on to the lay barges used in the pipeline construction.

The procedure used on the barges has also not changed for many years. In order to use the presently used conventional mastic in which bitumen is distributed throughout the mix, the blocks or sheets of mastic, which are stored on pallets on the barge, have to be crushed into smaller particles before being heated up, with constant mixing and agitation before the mastic is poured into the moulds around the welded joints.

French Patent Publication No. 2,208,966 discloses a granular or powdered asphalt of homogeneous structure in which the particles are made up of two interpenetrating phases of filler particles embedded in bitumen or bitumen micelles embedded in a small mass of filler. Such a composition is produced in a single stage by pulverising the bitumen at a temperature of 100-200°C on to the filler, which is subjected to vigorous stirring and maintained at low temperature.

All of these procedures are fairly labour and energy intensive. In the current manufacturing process, for example, the bitumen is added hot, and during mixing is maintained at a temperature somewhere between 160°C and 210°C. In order not to slow down the mixing process, the filler is conventionally heated prior to mixing, or heated by mixing with hot bitumen and heated aggregates. Given the volume of aggregate needed, it is necessary to heat the aggregate prior to mixing. These three procedures all require substantial input of energy, during both the mixing and the heating procedures. Once mixed, the mastic is maintained at 180°C before all the energy put in is effectively lost when the mastic is poured into moulds and cut or shaped, and then allowed to cool further to form solid blocks. Once the blocks have formed, a further tedious, labour-intensive operation takes place to load them onto the barges. When on the barges, the energy that is needed to use the mastic involves the crushing and heating operations. Barge owners are usually very keen to minimise the cost of their operation, but there has not until now been any simple alternative to the procedures currently in use.

We have now devised a procedure which enables a mastic asphalt product to be produced using substantially less energy. Furthermore, at the point of use, our product requires less input of energy on the part of the user to use it. In our procedure, which comprises one aspect of the invention, a first, partial amount of liquid bitumen, say from about 20% to 40% of the total amount to be used, is introduced at a usual temperature, for example between 140° and 220°C, desirably 160 to 210°C, and mixed with all the filler material to be used, but which need not have been heated, and with all the aggregate material to be used. The aggregate material will have been subjected to some heating in order to dry it but not as much as in the conventional process.

The aggregate and filler materials are mixed e.g. in a conventional, such as a paddle mixer with the partial amount of bitumen at a lower temperature than is normal. The bitumen will generally start at a temperature between 140° and 220°C, usually between 160 and 210°C, the filler at air (ambient) temperature and the aggregates at elevated temperature, e.g. at from 110° to 175° C. No further heat is added during the mixing process. The typical mix temperature of this stage is above the softening point of the bitumen used.

This forms a hot coated mass which is allowed to cool, generally to a temperature below 40°C. This half product of bitumen coated material, when cool, tends because of the relatively low content of bitumen to be a loosely-bound, easy-crumbling mass which readily produces a free-flowing particulate material on attrition. It may comprise e.g. from 3 - 6% by weight bitumen, together with all the desired filler and aggregates, e.g. from 16 to 22% filler and from 72 to 81% aggregates. It may if desired, be stored in this form, e.g. in bags. Such a product is a novel composition of matter and comprises another aspect of the invention.

The cool (air temperature) bitumen coated material (half product) and the remaining bitumen necessary to provide the conventional mastic proportions may then be mixed. Thus, the remaining 60% to 80% of the desired total bitumen content may then be added at its usual temperature, such as 140- 220°C, e.g. at from 165- 210° C, to the relatively cool half product in a conventional, e.g. a paddle mixer. The mix is allowed to cool whilst being stirred, no further heat being applied. As the mixing takes place therefore, the temperature of the mix falls to a level typically below the softening point of the bitumen used.

This product formed has the same chemical composition as conventional marine mastic but is in a much more open, granular form. It comprises essentially particulates, some of which are bitumen rich particulates, which may be protected by lean half product. It resembles a solid rubble. It can be broken by hand. Such a product is a new composition of matter and comprises a further aspect of the invention.

This granular mastic product has huge advantages for the user. It will usually be transported in large bags and, being in the form that it is, it is far easier to crush or break down into smaller particles for use in the heater/mixer on the lay barge. Rather than have an operative permanently employed on the lay barge lifting the heavy blocks of conventional mastic and inserting them into a crushing device, large bags of the product of the invention can simply be hoisted over the heater/mixer apparatus and slit to empty (voiding the bag completely) in one easy movement. Further, because the product is so much more open-textured and less dense than even the particles formed by crushing the moulded blocks, less heat energy is needed to melt and heat the mastic for use.

The final product for use as a marine mastic will generally comprise from 14% to 16%, e.g. 15% by weight bitumen, from 15% to 19%, e.g. 17% by weight filler, such as limestone, of suitable particle size, and from 65% to 71%, e.g. 68% by weight of aggregate the mastic being in the form of non-homogeneous granular particles including bitumen rich particulates. There is, of course, some flexibility in the nature of the materials that can be used. It will, of course, be desirable for the aggregate materials to be of such a nature in terms of size so as to comply with the Fuller Curves (see Fuller and Thompson - "The Laws of Proportioning Concrete", Trans. Am. Soc. Civil Engineers, 1907, 59, pp.67-172). The bitumen that may be used can have a range of softening temperatures and hardnesses (as measured by penetration depth at 25°C). The softening temperature will typically lie in the range 70° to 120°C, and the hardness as measured by penetration depth (in units of 0.1 mm) in the range of 15 - 40. Typical bitumens that may be used could be 75/30 and 85/40. A preferred bitumen might be 85/25.

It will be appreciated that products of the type of those in the present case may also be of interest in other industrial sectors. Much mastic is used in the building and construction industries on land, such as in roofing applications, and the ease with which the type of product of the present case can be heated to softening and melting on site will appeal also to the roofing specialist. For roofing applications, a product would be manufactured with a rather higher proportion of filler than would be normal for a marine mastic. Typically, for a roofing application, the approximate amounts of bitumen, filler and aggregate might be 12% bitumen, 78% filler and 10% aggregate.

The bitumen used has the specification:
15% Oxidised Bitumen 85/25 (BS, 3690 Part 2)
- Softening point 85 +/-5°C (BS 2000 Part 58)
- Penetration at 25°C 25 +/-5 (0.1 mm) (BS 2000 Part 49)
The filler used has the specification:
17% Limestone Filler (BS 594 Part 1 : 1992 CL 2.4.2)
- sieve analysis 85-100% passing 75 *µ*m sieve

The aggregate used has the specification:
68% Aggregates - graded and free from organic matter
- sieve analysis

| BS sieve | % passing |
|---|---|
| 6.3 mm | 100 |
| 5.0 mm | 90 - 100 |
| 3.35 mm | 70 - 90 |
| 2.36 mm | 55 - 75 |
| 1.18 mm | 35 - 55 |
| 600 *µ*m | 15 - 35 |
| 212 *µ*m | 5 - 15 |

### Example 1

| | | | |
|---|---|---|---|
| In Phase I | 3% | Bitumen | (temp.165°-210°C) |
| | 19.4% | Filler | (Air temp) |
| | 77.6% | Aggregates | (temp 100°-175°C) |

are mixed together with no further heating to give a lean (in bitumen) half product.

| | | | |
|---|---|---|---|
| In Phase II | 12.4% | Bitumen | (temp 165°C-210°C) |
| | 87.6% | Lean half-product | (Air temp) |

are mixed together with no further heating to give a final product, which comprises

| | | |
|---|---|---|
| 15% | Bitumen | - (87.6 x 3% + 12.4%) |
| 17% | Filler | - (87.6 x 19.4%) |
| 68% | Aggregates | - (87.6 x 77.6%) |

### Example 2 (a rich half product)

| | | | |
|---|---|---|---|
| In Phase I | 6.0% | Bitumen | (temp.165°-210°C) |
| | 18.8% | Filler | (Air temp) |
| | 75.2% | Aggregates | (temp 100°-175°C) |

are mixed together with no further heating to give a richer (in bitumen) half product.

| | | | |
|---|---|---|---|
| In Phase II | 9.6% | Bitumen | (temp 165°C-210°C) |
| | 90.4% | rich Half-product | (Air temp) |

are mixed together with no further heating to give a final product, which comprises

| | | |
|---|---|---|
| 15% | Bitumen | - (90.4 x 6% + 9.6%) |
| 17% | Filler | - (90.4 x 18.8%) |
| 68% | Aggregates | - (90.4 x 75.2%) |

## Claims

1. A marine mastic comprising 14 to 16% by weight bitumen, from 15 to 19% by weight filler and from 65 to 71% by weight aggregate, the mastic being in the form of non-homogeneous granular particles including bitumen rich particulates.

2. A process for preparing a mastic which comprises in a first step, mixing a partial volume of bitumen being at a temperature from 140 to 220°C with aggregate at elevated temperatures and filler, the mixing being effected at a temperature above the softening point of the bitumen to form a bitumen coated product, allowing said bitumen coated product to cool, and followed by mixing the said bitumen coated product with further bitumen being at a temperature from 140 to 220°C, the mixing temperature being allowed to fall below the softening point of the bitumen used.

3. A process as claimed in claim 2 wherein the bitumen is at a temperature of 160 to 210°C when mixed in the first step.

4. A process as claimed in claim 2 or claim 3 wherein the bitumen is at a temperature of 165 to 210°C when mixed in the second step.

5. A process as claimed in claim 2 or claim 3 wherein in the first step, the partial volume of bitumen used is from 20 to 40% of the total.

6. A process as claimed in claim 2 or claim 3 wherein in the first step, the aggregate has a temperature of from 110 to 175°C prior to mixing.

7. A mastic half product comprising from 3 to 6% by weight bitumen, from 16 to 22% filler and from 72 to 81% aggregates.

8. A mastic product obtainable by a process as claimed in claim 2, comprising desired amounts of bitumen, filler and aggregates in the form of a particulate granular product.

## Patentansprüche

1. Seewasserbeständiger Mastix, der 14 bis 16 Gewichts-% Bitumen bzw. Asphalt, 15 bis 19 Gewichts-% Füllstoff und 65 bis 71 Gewichts-% Aggregat aufweist, wobei der Mastix in Form von nicht-homogenen, granulären Partikeln vorliegt, die Bitumen-reiche Teilchen enthalten.

2. Verfahren zur Herstellung eines Mastix, das in einem ersten Schritt das Mischen eines Teilvolumens Bitumen bzw. Asphalt bei einer Temperatur von 140 bis 220°C vorliegenden mit Aggregat bei erhöhten Temperaturen und Füllstoff umfaßt, wobei das Mischen bei einer Temperatur oberhalb des Erweichungspunktes des Bitumens bzw. Asphalts bewirkt wird, um ein Bitumen-beschichtetes Produkt auszubilden, das man abkühlen läßt und das danach mit weiterem bei einer Temperatur von 140 bis 220°C vorliegenden Bitumen bzw. Asphalt gemischt wird, das bzw. der wobei die Mischtemperatur unter den Erweichungspunkt des verwendeten Bitumens fällt.

3. Verfahren nach Anspruch 2, wobei das Bitumen bzw. der Asphalt bei einer Temperatur von 160 bis 210°C vorliegt, wenn es bzw. er im ersten Schritt gemischt wird.

4. Verfahren nach Anspruch 2 oder Anspruch 3, wobei das Bitumen bzw. der Asphalt bei einer Temperatur von 165 bis 210°C vorliegt, wenn es bzw. er in dem zweiten Schritt gemischt wird.

5. Verfahren nach Anspruch 2 oder Anspruch 3, wobei in dem ersten Schritt das Teilvolumen des verwendeten Bitumens bzw. Asphalts 20 bis 40% des Gesamtvolumens beträgt.

6. Verfahren nach Anspruch 2 oder Anspruch 3, wobei in dem ersten Schritt das Aggregat eine Temperatur von 100 bis 175°C vor dem Mischen aufweist.

7. Mastixhalbprodukt, das 3 bis 6 Gewichts-% Bitumen bzw. Asphalt, 16 bis 22% Füllstoff und 72 bis 81% Aggregate aufweist.

8. Mastixprodukt, das durch ein Verfahren nach Anspruch 2 erhältlich ist und das die gewünschten Bitumen-, Füllstoff- und Aggregatmengen in Form eines granulären Teilchenprodukts aufweist.

## Revendications

1. Mastic pour applications marines comprenant de 14 à 16 % en poids de bitume, de 15 à 19 % en poids d'une matière de charge et de 65 à 71 % en poids d'un agrégat, le mastic se présentant sous forme de particules granulaires non homogènes comprenant des particules riches en bitume.

2. Procédé de préparation d'un mastic, qui dans une première étape consiste à mélanger un volume partiel de bitume, qui se trouve à une température de 140 à 220°C, à un agrégat à des températures élevées et à une matière de charge, l'opération de mélange étant réalisée à une température supérieure au point de ramollissement du bitume, pour former un produit revêtu de bitume, à permettre audit produit revêtu de bitume de refroidir, puis à mélanger ledit produit revêtu de bitume à une nouvelle quantité de bitume à une température de 140 à 220°C, la température de mélange pouvant tomber en dessous du point de ramollissement du bitume utilisé.

3. Procédé selon la revendication 2, dans lequel le bitume est à une température de 160 à 210°C lors de son mélange de la première étape.

4. Procédé selon la revendication 2 ou 3, dans lequel le bitume se trouve à une température de 165 à 210°C lors de son mélange de la deuxième étape.

5. Procédé selon la revendication 2 ou 3, dans lequel, dans la première étape, le volume partiel de bitume utilisé est de 20 à 40 % du total.

6. Procédé selon la revendication 2 ou 3, dans lequel, dans la première étape, l'agrégat a une température de 110 à 175°C avant le mélange.

7. Semi-produit de mastic comprenant de 3 à 6 % en poids de bitume, de 16 à 22 % d'une matière de charge et de 72 à 81 % de granulats.

8. Produits de mastic pouvant être obtenus par un procédé selon la revendication 2, comprenant des quantités voulues de bitume, d'une matière de charge et d'agrégats, sous forme d'un produit granulaire particulaire.
